# EUROPÄISCHE PATENTANMELDUNG

(11) **EP 0 989 054 A2**
(43) Veröffentlichungstag der Anmeldung: **29.03.2000**
(21) Anmeldenummer: 99118036.5
(22) Anmeldetag: 21.09.1999
(51) Int. Cl.: B62D 35/00

(54) **Wohnwagen, insbesondere Caravan, Wohnanhänger oder Wohnmobil**

(30) Priorität: 25.09.1998 DE 19844058
(71) Anmelder: Hymer IDC GmbH + Co. KG, 88339 Bad Waldsee (DE)
(72) Erfinder: Tomforde, Johann, 71069 Sindelfingen (DE)
(74) Vertreter: Wilhelm & Dauster Patentanwälte European Patent Attorneys

(57) **Zusammenfassung**

Wohnwagen in Sandwichplattenbauweise mit einer Aufbaustruktur in einem strömungstechnisch gesehenen An- und/oder Abströmungsbereich der Aufbaustruktur auf Höhe wenigstens eines Eckabschnittes ausgespart und durch ein Konturteil (7,8) ersetzt, das sich außenhautbündig in die Aufbaustruktur einfügt und aerodynamisch räumlich gekrümmt ist.

## Beschreibung

Die Erfindung betrifft einen Wohnwagen, insbesondere einen Caravan, einen Wohnanhänger oder ein Wohnmobil, mit einer Aufbaustruktur in Plattenbauweise, insbesondere in Sandwichplattenbauweise, wobei die Aufbaustruktur wenigstens abschnittsweise mit strömungsgünstig gestalteten Eckabschnitten versehen ist.

Ein solcher Wohnwagen ist in Form eines Wohnanhängers aus der DE 83 17 231 U1 bekannt. Ein solcher Wohnwagen ist üblicherweise mit einer Aufbaustruktur versehen, die in Sandwichplattenbauweise ausgeführt ist. In einem Bugbereich des Wohnwagens ist die Aufbaustruktur in einem unteren Bereich weiter nach vorne gezogen und mit abgeschrägten Eckabschnitten versehen, die gegenüber bis zu diesem Zeitpunkt bekannten Wohnwagen eine aerodynamisch verbesserte Anströmung des Bugbereiches des Wohnwagens ermöglichte. Dennoch verbleiben auch bei dieser Lösung ebene Flächen, die durch gestufte Kanten ineinander übergehen, so daß in strömungstechnischer Hinsicht lediglich geringe Verbesserungen der Aerodynamik erzielt werden.

Aufgabe der Erfindung ist es, einen Wohnwagen der eingangs genannten Art zu schaffen, der mit einfachen Mitteln eine wesentlich verbesserte Aerodynamik aufweist.

Diese Aufgabe wird dadurch gelöst, daß die Aufbaustruktur in einem strömungstechnisch gesehenen An- und/oder Abströmungsbereich der Aufbaustruktur auf Höhe wenigstens eines Eckabschnittes ausgespart und durch ein Konturteil ersetzt ist, das sich zumindest nahezu außenhautbündig in die Aufbaustruktur einfügt und aerodynamisch räumlich gekrümmt ist. Die Aussparung der Aufbaustruktur in den strömungstechnisch maßgeblichen Eckabschnitten erfolgt dabei so großflächig und großzügig, daß das jeweils eingesetzte Konturteil aerodynamisch so günstig wie möglich geformt werden kann. Als Eckabschnitte sind sowohl seitliche als auch obere oder untere, bug- oder heckseitig angeordnete Aufbauzonen zu verstehen, an denen die Luftströmung abreißen und zu ungünstiger Wirbelbildung führen könnte. Die Erfindung geht von der Erkenntnis aus, daß ein wesentlicher Grund für die schlechte Aerodynamik von Wohnwagen in Plattenbauweise die äußerst reduzierten Möglichkeiten waren, derartige- Plattenstrukturen strömungsgünstig zu formen. Derartige Platten, insbesondere Sandwichplatten, sind naturgemäß eben gestaltet und können allenfalls um eine einzelne Raumachse gekrümmt werden, was durch eine sogenannte einseitige Abwicklung erzielbar ist. Durch die großflächige Aussparung der Aufbaustruktur in den für die An- und/oder Abströmung neuralgischen Bereichen und den jeweiligen Einsatz eines ohne Einschränkungen frei formbaren Konturteiles wurde die Möglichkeit geschaffen, auch Wohnwagen in Plattenbauweise aerodynamisch äußerst günstig zu gestaltet. Wesentlich für die Anströmung eines Wohnwagens sind insbesondere die seitlichen Eckabschnitte im Bugbereich der Aufbaustruktur, die über die Breite des Zugfahrzeuges seitlich nach außen abragen. Für die Abströmung im Heckbereich maßgeblich ist zum einen der Übergang des Dachbereiches zum Heckbereich und zum anderen der Übergang zwischen den Seitenwandbereichen und dem Dachbereich, jeweils zum Heckbereich hin. Erfindungsgemäß werden entsprechende Konturteile daher bevorzugt in diesen genannten Bereichen eingesetzt. Erfindungsgemäß kann jedoch entweder der Anströmungsbereich oder der Abströmungsbereich oder schließlich auch sowohl An- als auch Abströmungsbereich mit wenigstens einem entsprechenden Konturteil versehen sein.

Das Konturteil ist vorzugsweise als Kunststofformteil gestaltet, da hierdurch mit relativ geringem Aufwand nahezu beliebige Formen erzielbar sind. In gleicher Weise kann das Konturteil jedoch auch als Metallblechteil, insbesondere als Leichtmetallblechkonstruktion, gestaltet sein.

In Ausgestaltung der Erfindung ist bei einer Gestaltung als Wohnanhänger in Bodenbereichen der Aufbaustruktur wenigstens eine aerodynamisch geformte Stoßfängerverkleidung vorgesehen, die sich von seitlichen Radläufen zum Heckbereich nach hinten und in den Heckbereich hinein erstreckt. Dadurch wird die seitliche und heckseitige Umströmung des Wohnwagens verbessert, so daß auch diese Ausgestaltung aerodynamische Vorteile ergibt.

In weiterer Ausgestaltung der Erfindung sind in der Stoßfängerverkleidung Rückleuchten integriert. Dadurch weist die Stoßfängerverkleidung mehrere Funktionen auf, da sie neben der Stoßfangfunktion und der aerodynamischen Funktion auch noch die Aufnahmefunktion für Rückleuchten übernimmt.

In weiterer Ausgestaltung der Erfindung ist in einem Abströmungsbereich der Aufbaustruktur zur Bildung einer Strömungsabrißkante wenigstens ein Luftleitelement, insbesondere ein Spoiler, vorgesehen. Dieses Luftleitelement kann entweder als separates Teil in die Aufbaustruktur integriert sein oder einstückig an einem Konturteil angeformt sein, falls ein solches Konturteil sich im Übergangsbereich zwischen Dach und Heck über die gesamte Aufbaubreite erstreckt.

In weiterer Ausgestaltung der Erfindung ist eine Deichsel mit einer aerodynamisch geformten Verkleidung versehen. Durch die Verkleidung wird der Luftwiderstandsbeiwert des Wohnwagens weiter reduziert. Die Verkleidung der Deichsel kann vorteilhaft noch mit wenigstens einem Aufnahmefach für Sicherheits- und Wartungseinrichtungen wie einem Werkzeugkasten, einem Warndreieck oder ähnlichem versehen sein.

In weiterer Ausgestaltung der Erfindung erstreckt sich eine ein- oder mehrteilige Platteneinheit unter Bildung des Dachbereiches über die gesamte Aufbaulänge und ist sowohl im Heckbereich als auch im Bugbereich unter einseitiger Krümmung bis zu einem Bodenbereich der Aufbaustruktur nach unten gezogen. Durch diese einstückig zusammenfügbare oder einteilig durchgehende Sandwichplatteneinheit wird für die gesamte Aufbaustruktur eine besonders hohe Steifigkeit erzielt. Je nach Bedarf kann die Platteneinheit aus zwei oder drei Plattenteilen zusammengefügt sein, die in Längsrichtung stumpf aneinanderstoßen. Dadurch sind mit einfachen Mitteln unterschiedliche Aufbaulängen realisierbar.

In weiterer Ausgestaltung der Erfindung ist wenigstens eines der Konturteile lösbar mit der Aufbaustruktur verbunden, und an das Konturteil anschließend ist im Inneren der Aufbaustruktur ein Stauraum vorgesehen. Dadurch weist das wenigstens eine Konturteil eine zusätzliche Funktion auf, indem es als Abdeckung für einen Stauraum dient. Vorzugsweise ist der Stauraum im Bugbereich der Aufbaustruktur vorgesehen, wobei besonders vorteilhaft die Aufbaustruktur in diesem Bereich weiter nach vorne gezogen ist, so daß trotz des Vorsehens eines Stauraumes noch genügend Raum innerhalb der Aufbaustruktur zur Verfügung steht. Dadurch, daß der Stauraum innerhalb der Aufbaustruktur vorgesehen ist, ist auch der Stauraum wie der übrige Innenraum der Aufbaustruktur in gleicher Weise isoliert.

In weiterer Ausgestaltung der Erfindung erstreckt der Stauraum sich über die gesamte Breite der Aufbaustruktur in Wagenquerrichtung. In weiterer Ausgestaltung ist der Stauraum zu beiden Konturteilen des Bugbereiches hin offen, und beide Konturteile sind lösbar angeordnet. Durch die Erstreckung des Stauraumes über die gesamte Breite der Aufbaustruktur ist der Stauraum so großzügig bemessen, daß neben der Unterbringung von Gasflaschen und anderem Transportgut auch sperrige Gegenstände wie Fahrräder, Surfbretter oder ähnliches verstaut werden können. Eine Halterung dieser Gegenstände außen am Wohnwagen ist dadurch entbehrlich, wodurch sich die Aerodynamik des Wohnwagens weiter verbessern läßt. Vorzugsweise sind im Stauraum Sicherungsmittel zur Halterung von Transportgegenständen vorgesehen. Dadurch ist innerhalb des Stauraumes eine sichere Halterung der verschiedenen Gegenstände gewährleistet.

In weiterer Ausgestaltung der Erfindung ist der Stauraum durch wenigstens eine Trennwand vom Wageninnenraum abgetrennt. In weiterer Ausgestaltung ist die Trennwand lösbar zwischen Stauraum und Wageninnenraum angeordnet. Falls der Stauraum daher zur Verstauung von Gegenständen nicht benötigt wird, kann die Trennwand entfernt werden, wodurch der Innenraum des Wohnwagens vergrößert ist. Die Trennwand ist vorzugsweise isolierend gestaltet. Sie kann klapp- oder schwenkbeweglich angeordnet sein, um einen vergrößerten Wohn- oder Schlafraum zu erhalten.

In weiterer Ausgestaltung der Erfindung ist das wenigstens eine Konturteil schwenkbeweglich an der Aufbaustruktur gelagert und in seiner geschlossenen Ruheposition mittels einer Schloßeinheit arretiert. Die schwenkbewegliche Lagerung ermögicht die verliersichere Anordnung an der Aufbaustruktur, wobei die Schwenklagerung in grundsätzlich bekannter Weise mittels einfacher Scharnieranordnungen erfolgen kann.

In weiterer Ausgestaltung der Erfindung ist an dem wenigstens einen Konturteil eine Handhabe zum manuellen Öffnen sowie ein Betätigungselement zum manuellen Entriegeln der Schloßeinheit vorgesehen. Dadurch wird ein einfaches Öffnen und Schließen des jeweiligen Konturteiles ermöglicht.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in perspektivischer Darstellung schräg von vorne eine Ausführungsform eines erfindungsgemäßen Wohnwagens,
- Fig. 2: in einer weiteren perspektivischen Darstellung schräg von hinten den Wohnwagen nach Fig. 1,
- Fig. 3: in verkleinerter Darstellung eine Draufsicht auf den Wohnwagen nach den Fig. 1 und 2,
- Fig. 4: in perspektivischer Darstellung schematisch eine Aufbaustruktur des Wohnwagens nach den Fig. 1 bis 3,
- Fig. 5: eine Explosionsdarstellung der Aufbaustruktur nach Fig. 4,
- Fig. 6: eine Frontansicht des Wohnwagens nach den Fig. 1 bis 5,
- Fig. 7: eine Seitenansicht eines Teilbereiches des Wohnwagens nach Fig. 6 in einem Bugbereich,
- Fig. 8: eine Draufsicht auf den Bugbereich des Wohnwagens nach Fig. 7,
- Fig. 9: einen Längsschnitt durch den Bugbereich nach den Fig. 7 und 8, und
- Fig. 10: in einer perspektivischen Darstellung schräg von hinten eine weitere Ausführungsform eines erfindungsgemäßen Wohnwagens ähnlich Fig. 2.

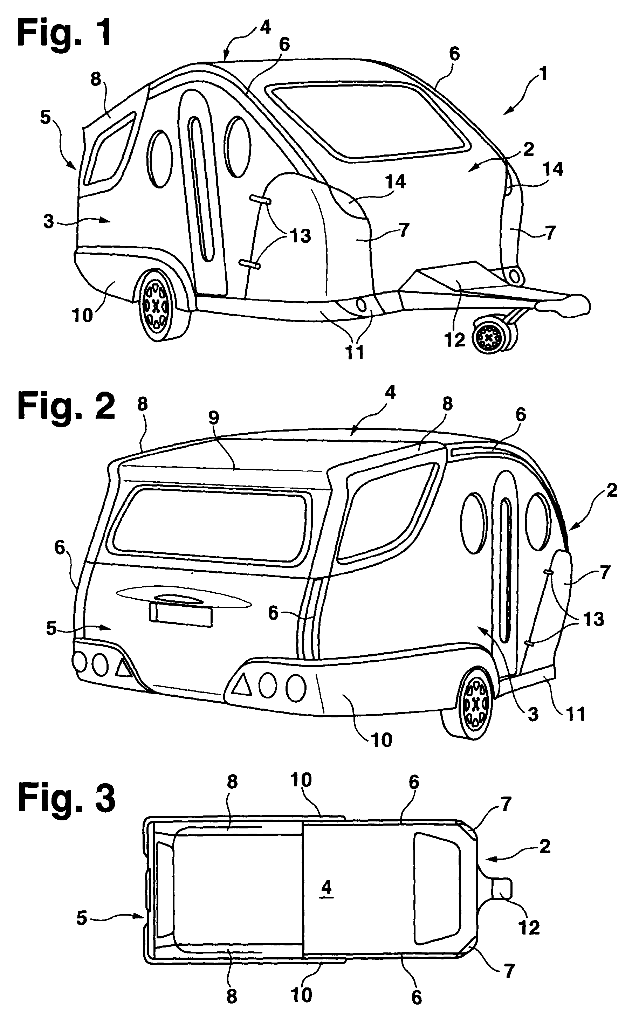

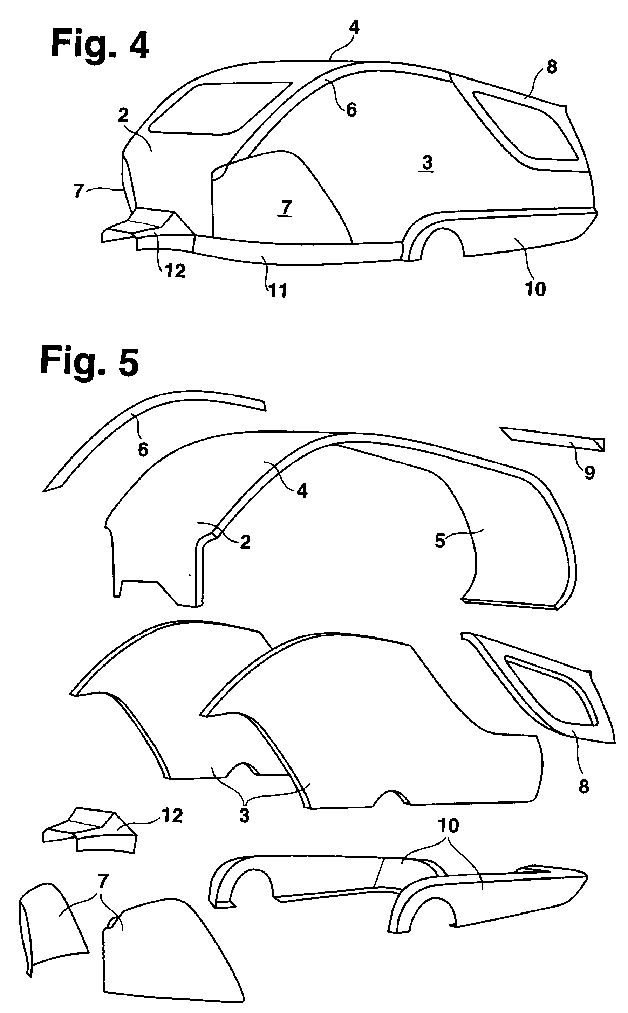

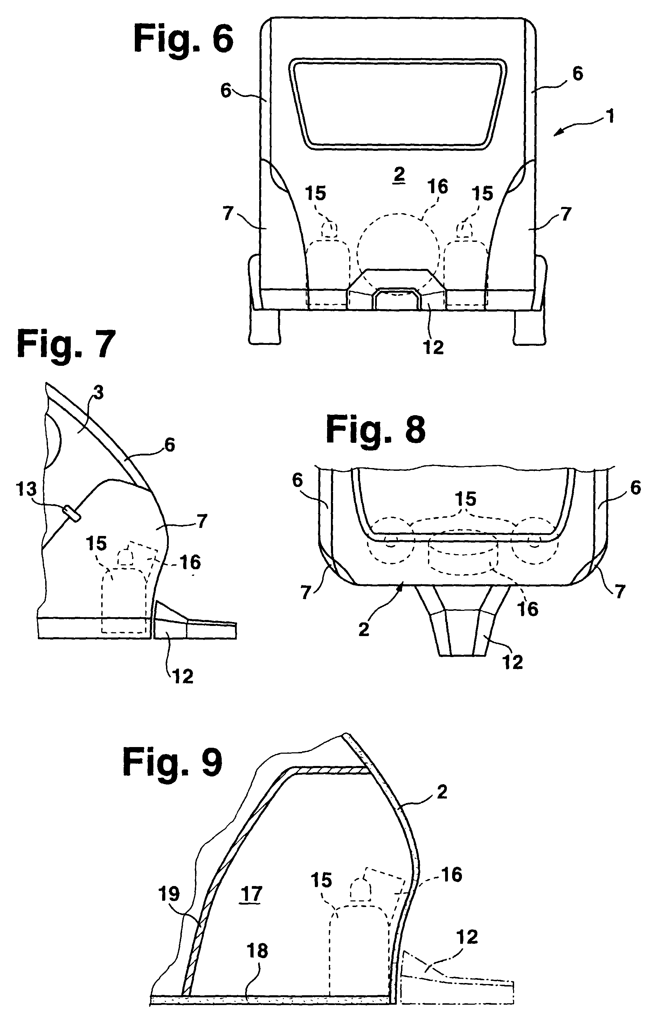

Ein nicht motorisierter Wohnwagen in Form eines Wohnanhängers 1 gemäß den Fig. 1 bis 9 weist ein nicht näher dargestelltes Fahrgestell auf, das mit einer Radachse sowie zwei Rädern sowie mit einer Deichsel versehen ist. Mit dem Traggestell ist eine Aufbaustruktur verbunden, die im wesentlichen aus Sandwichplatten 2 bis 5 aufgebaut ist (Fig. 4 und 5). Die verschiedenen Sandwichplatten 2 bis 5 selbst sind in grundsätzlich bekannter Weise aufgebaut, indem eine Kernstruktur, vorzugsweise eine Isolierschaumstruktur, außen von einer Aluminiumaußenhaut und innen von einer Holz-, Leichtmetall- oder Kunststoffschicht überzogen ist. Die Aufbaustruktur weist zwei ebene Seitenwandteile 3 auf, die jeweils als einstückige Sandwichplatten gestaltet sind. Die Seitenwandteile 3 sind mit einem als Platteneinheit dienenden, einstückigen Kombinationsaufbauteil 2, 4, 5 über Kantenprofile 6 verbunden, wobei in Fig. 5 lediglich die vorderen, zu einem Bugbereich 2 hin ragenden Kantenprofile 6 dargestellt sind. Das Kombinationsaufbauteil 2, 4, 5 erstreckt sich über die gesamte Länge der Aufbaustruktur, wobei sowohl ein Dachbereich 4 als auch ein Bugbereich 2 und ein Heckbereich 5 in diesem Kombinationsaufbauteil integriert sind. Das Kombinationsaufbauteil ist ebenfalls aus einer einteiligen Sandwichplatte aufgebaut, die jedoch im Bug- und Heckbereich 2, 5 einseitig abgewickelt ist. Dabei ist die Sandwichplatte zweidimensional gekrümmt und sowohl im Bugbereich 2 als auch im Heckbereich 5 bis zu einer Bodenstruktur des Traggestells des Wohnanhängers 1 nach unten gezogen. Die einseitige Abwicklung ist ein Fachbegriff, der den maßgeblichen Fachkreisen geläufig ist. Um die Abwicklung und damit die gewünschte Krümmung der Sandwichplatte zu erzielen, wird diese von einer Seite her, vorliegend von der Innenseite her, an den jeweils gewünschten Stellen mehrfach ausgeklinkt, entsprechend gekrümmt und anschließend stoffschlüssig verbunden, insbesondere verklebt. Durch die abgewickelte Gestaltung des Kombinationsaufbauteiles ergibt sich bereits durch die Sandwichplattenbauweise eine hohe Gesamtsteifigkeit und Stabilität der Aufbaustruktur und damit des Wohnwagens. In gleicher Weise kann wenigstens ein fertig gekrümmtes und anschließend ausgeschäumtes Plattenteil vorgesehen sein.

Bei einem nicht dargestellten, jedoch in Fig. 5 durch eine strichpunktierte Trennstelle angedeuteten Ausführungsbeispiel ist das Kombinationsaufbauteil aus zwei oder mehr Plattenteilen zusammengesetzt, wobei Trennfugen im Dachbereich vorgesehen sein können. Je nach Länge der Plattenteile sind so unterschiedliche Baulängen der Aufbaustruktur erzielbar.

Die Krümmung des Kombinationsaufbauteiles im Bugbereich 2 ist relativ weit nach unten gezogen, so daß sich strömungstechnisch ein relativ niedriger Staupunkt bei der Anströmung ergibt. Da der Bugbereich 2 nach diesem Staupunkt relativ sanft ansteigend in den Dachbereich 4 übergeht, ergibt sich insgesamt ein aerodynamisch äußerst günstige Gestaltung des Bugbereiches 2.

Im Heckbereich 5 ist das Kombinationsaufbauteil 2, 4, 5 am Übergangsbereich zwischen Dachbereich 4 und Heckbereich 5 zusätzlich mit einem in Wagenquerrichtung ausgerichteten Luftleitelement in Form eines Heckspoilers 9 versehen, der auf die Kernstruktur des Kombinationsaufbauteiles 2, 4, 5 aufgesetzt und anschließend von der Aluminiumhaut des Kombinationsaufbauteiles mit überzogen wird.

In alle Sandwichplatten, d.h. sowohl in die Seitenwandteile als auch in das Kombinationsaufbauteil werden an gewünschten Stellen Aussparungen für Fenster sowie für wenigstens eine Tür eingebracht.

Um die Aufbaustruktur des Wohnwagens 1 - strömungstechnisch gesehen - sowohl im Anströmungsbereich und damit im Bugbereich als auch im Abströmungsbereich und damit im hinteren Bereich des Wohnwagens 1 aerodynamisch günstig zu gestalten, ist zusätzlich zu der Krümmung des Kombinationsaufbauteiles 2, 4, 5 im Bugbereich sowohl die Seitenwand 3 auf jeder Seite als auch das Kombinationsaufbauteil 2, 4, 5 im Bugbereich auf Höhe der vorderen Eckabschnitte der Aufbaustruktur gemäß der Darstellung nach Fig. 5 großflächig ausgespart. Die Seitenwandteile 3 sind zudem in der hinteren Hälfte oberhalb einer Gürtellinie des Wohnwagens bis zum Heck hin ebenfalls ausgespart. In diesem Bereich ist auch kein Kantenprofil 6 zwischen Kombinationsaufbauteil 2, 4, 5 und Seitenwandteil 3 vorgesehen. Diese ausgesparten Teilbereiche der Aufbaustruktur sind in strömungstechnischer Hinsicht für die aerodynamische Gestaltung der Aufbaustruktur besonders wichtig. Da mit den beschränkten Formgebungsmitteln für die Sandwichplattenbauweise eine entsprechend aerodynamisch günstige Gestaltung dieser Eckabschnitte nicht möglich ist, wurden diese Teilbereiche ausgespart und durch Kunststofformteile, die Konturteile im Sinne der Erfindung darstellen, ersetzt. Die Kunststofformteile 7, 8 sind außenhautbündig in die Aufbaustruktur an den ausgesparten Teilbereichen eingesetzt und werden in geeigneter Weise nach entsprechenden aerodynamischen Gesichtspunkten räumlich gekrümmt. Die räumliche Krümmung der nachfolgend noch näher beschriebenen Konturteile 7 im Bugbereich 2 ist insbesondere anhand der Fig. 1 und 2 sowie 5 gut erkennbar. Die heckseitigen Seitenkonturteile 8, die Seitenwandabschnitte darstellen, sind zumindest im Bereich ihrer Oberseite ebenfalls räumlich gekrümmt, indem sie gemäß der strichpunktierten Darstellung in Fig. 3 zum Heckbereich hin mit ihrer Außenkontur allmählich nach innen geführt sind.

Die als Seitenwandabschnitte gestalteten Konturteile 8 sind im Bereich ihrer Oberkante sowie im Bereich ihres heckseitigen Randes bündig und fluchtend mit den Kantenprofilen 6 fortgeführt und stützen sich an den Seitenrändern des Kombinationsaufbauteiles 2, 4, 5 ebenfalls außenhautbündig ab. Diese Seitenwandabschnitte 8 sind beim dargestellten Ausführungsbeispiel fest mit der übrigen Aufbaustruktur verbunden. Es ist jedoch auch möglich, diese Seitenwandabschnitte 8 lösbar zu gestalten. In jedem Seitenwandabschnitt 8 ist ein großflächiges Sichtfenster integriert.

Zur weiter verbesserten aerodynamischen Gestaltung der Aufbaustruktur sind im Bodenbereich der Aufbaustruktur Bug- und Seitenschürzen 11 vorgesehen, die strömungsgünstige Verkleidungen darstellen. Auch die Deichsel ist mit einer Verkleidung 12 versehen, die strömungsgünstig gestaltet ist und an die strömungstechnischen Vorgaben des Bugbereiches 2 angepaßt ist. In der Verkleidung 12 ist zudem in nicht näher dargestellter Weise wenigstens ein Aufnahmefach für die Aufnahme von Sicherheits- und Wartungseinrichtungen wie Werkzeugkasten, Warndreieck oder ähnlichem vorgesehen. Das wenigstens eine Aufnahmefach ist durch eine Abdeckung verschließbar.

Von einem Radlauf auf jeder Seite des Wohnwagens aus ist jeweils eine strömungsgünstig gestaltete Stoßfängerverkleidung 10 nach hinten geführt, die sowohl an den Fahrzeugseiten als auch hinten einen entsprechenden Stoßschutz bildet. Die beiden Stoßfängerverkleidungen 10 sind jeweils noch um den Heckbereich 5 zur Wagenmitte hin herumgezogen. In diesen Bereichen sind in den Stoßfängerverkleidungen 10 Rückleuchten wie Bremse, Blinker und Rücklicht integriert. Die Stoßfängerverkleidungen 10 sind von außen und von unten her an die Aufbaustruktur angesetzt und fest mit dieser verbunden.

Die beiden vorderen Konturteile 7 im Bugbereich 2 des Wohnwagens 1 weisen noch eine Zusatzfunktion auf, indem sie als Abdeckklappen für einen Stauraum 17 vorgesehen sind. Der Stauraum 17 erstreckt sich im Inneren der Aufbaustruktur im schräg vorgezogenen Bugbereich 2 über die gesamte Wagenbreite und ist nach Öffnung der beiden Konturteile 7 von beiden Wagenseiten her zugänglich. Der Stauraum 17 ist nach vorne durch die Sandwichplatte des Kombiaufbauteiles 2 in dessen Bugbereich zu den Seiten hin durch die Konturteile 7 begrenzt. Zum Innenraum der Aufbaustruktur hin ist eine Trennwand 19 vorgesehen, die den Stauraum 17 nach oben und nach hinten - auf die normale Fahrtrichtung des Wohnwagens 1 bezogen - begrenzt. Die Trennwand 19 weist einen Deckenabschnitt auf, der den Stauraum 17 nach oben begrenzt. Dieser Deckenabschnitt ist unterhalb eines Frontfensters positioniert und kann eine zusätzliche Ablagefläche für den Innenraum bilden. Der Stauraum 17 ist so groß bemessen, daß wenigstens ein Fahrrad, vorzugsweise wenigstens zwei Fahrräder, Surfbretter, Gepäckstücke wie Koffer, Golfbags, Taschen sowie ähnliche Gegenstände in diesem verstaut werden können. Die Trennwand 19 ist lösbar an einer Bodenstruktur 18 der Aufbaustruktur sowie entsprechenden Innenwandungsbereichen der Aufbaustruktur gehalten, so daß die Trennwand 19 bei Bedarf entfernt werden kann. Innerhalb des Stauraumes 17 sind Halterungen und andere Sicherungsmittel vorgesehen, um entsprechende Transportgegenstände in ihrer Position innerhalb des Stauraumes 17 zu sichern. Insbesondere sind Halterungen für Gasflaschen 15 und ein Ersatzrad 16 vorgesehen.

Die Konturteile 7 im Bugbereich 2 des Wohnwagens 1 sind als Kunststofformteile gestaltet. Sie können jedoch auch - wie auch die übrigen Konturteile - aus anderen Materialien, insbesondere Metallblech, hergestellt sein, solange diese Materialien eine nahezu beliebige Verformbarkeit zur Erzielung der gewünschten, strömungsgünstigen Außenkonturen gewährleisten. Die beiden Konturteile 7 sind mit Hilfe jeweils einer Scharnieranordnung 13, die aus zwei Scharnieren 13 besteht, an dem benachbarten Randbereich des jeweiligen Seitenwandteiles 3 schwenkbeweglich gelagert. Die beiden Konturteile 7 klappen somit flügelartig schräg nach hinten und nach oben auf. Zur Verriegelung der Konturteile 7 in ihrer geschlossenen Ruheposition ist jeweils eine nicht näher dargestellte Schloßeinheit vorgesehen, die durch Betätigungsgriffe analog einem Griff einer Heckklappe eines Kombi-Personenkraftwagens entriegelbar sind. Dazu ist in einem oberen Randbereich jedes Konturteiles 7 jeweils eine Griffmulde 14 vorgesehen, innerhalb der in nicht näher dargestellter Weise der jeweilige Betätigungsgriff oder das jeweilige Betätigungselement zum Entriegeln der Schloßeinheit integriert ist.

Wie insbesondere anhand der Fig. 1, 2 und 4 erkennbar ist, weist die Aufbaustruktur und damit der Wohnanhänger insgesamt über die Wagenlänge gesehen eine stromlinienförmige Gestaltung auf, indem im Bugbereich eine runde und ansteigende Nasenform gestaltet ist, die sich ab dem Dachbereich wieder verjüngt. Es ergibt sich somit eine delphinartige Form.

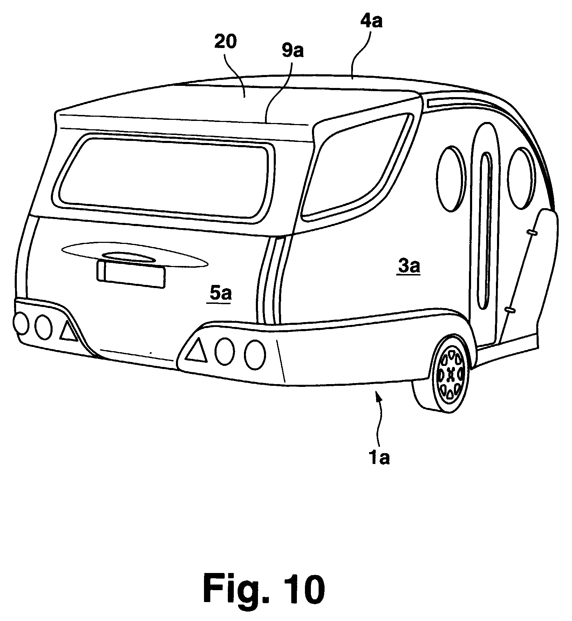

Ein Wohnanhänger 1a gemäß Fig. 10 entspricht im wesentlichen dem zuvor beschriebenen Wohnanhänger 1, so daß nachfolgend lediglich noch auf verbleibende Unterschiede eingegangen wird. Der Wohnwagen 1a weist in einem hinteren Bereich der Aufbaustruktur ein zentrales Konturteil 20 auf, das nach Art eines Hardtops bei einem Cabriolet gestaltet ist. Auch das Konturteil 20 ist als stabiles, tragendes Kunststofformteil gestaltet, wobei in dem Kunststofformteil sowohl ein hinterer Abschnitt des Dachbereiches 4a als auch ein oberer Abschnitt des Heckbereiches 5a sowie obere und hintere Abschnitte der Seitenwände 3a einstückig integriert sind. Das Konturteil 20 ist auf Höhe eines Wohn- und Eßbereiches des Innenraumes des Wohnwagens 1a positioniert. Demzufolge ist die Aufbaustruktur oberhalb einer Gürtellinie des Wohnwagens 1a auf Höhe des gesamten Wohn- und Eßbereiches sowohl über die Seitenwand- als auch über die Heck- und Dacherstreckung ausgespart und durch das allseitig bündig abschließende Kunststofformteil 20 ersetzt. Das Kunststofformteil 20 ist fest mit den entsprechenden Randbereichen der Aufbaustruktur verbunden. Es ist jedoch auch möglich, das Konturteil 20 lösbar an der Aufbaustruktur festzulegen. Da auch der gesamte dachseitige Heckbereich einstückig in dem Konturteil 20 integriert ist, kann auch das dachseitige Luftleitelement in Form des Heckspoilers 9a durch entsprechende Ausformung einstückig integriert sein.

## Patentansprüche

1. Wohnwagen, insbesondere Caravan, Wohnanhänger oder Wohnmobil, mit einer Aufbaustruktur in Plattenbauweise, insbesondere in Sandwichplattenbauweise, wobei die Aufbaustruktur wenigstens abschnittsweise mit strömungsgünstig gestalteten Eckabschnitten versehen ist,
**dadurch gekennzeichnet,**
daß die Aufbaustruktur in einem strömungstechnisch gesehenen An- und/oder Abströmungsbereich der Aufbaustruktur auf Höhe wenigstens eines Eckabschnittes ausgespart und durch ein Konturteil (7, 8, 20) ersetzt ist, das sich außenhautbündig in die Aufbaustruktur einfügt und aerodynamisch räumlich gekrümmt ist.

2. Wohnwagen nach Anspruch 1, dadurch gekennzeichnet, daß das Konturteil (7, 8, 20) jedes Eckabschnittes als Kunststoffformteil gestaltet ist.

3. Wohnwagen nach Anspruch 1 oder 2, dadurch gekennzeichnet, daß in einem Bugbereich (2) auf gegenüberliegenden Seiten jeweils ein Konturteil (7) vorgesehen ist.

4. Wohnwagen nach Anspruch 1 oder 2, dadurch gekennzeichnet, daß wenigstens ein Konturteil (8, 20) in einem Dachheckbereich vorgesehen ist.

5. Wohnwagen nach einem der vorhergehenden Ansprüche, dadurch gekennzeichnet, daß bei einer Gestaltung als Wohnanhänger (1, 1a) in Bodenbereichen der Aufbaustruktur wenigstens eine aerodynamisch geformte Stoßfängerverkleidung (10) vorgesehen ist, die sich von seitlichen Radläufen zum Heckbereich (5) nach hinten und in den Heckbereich (5) hinein erstreckt.

6. Wohnwagen nach Anspruch 5, dadurch gekennzeichnet, daß in der Stoßfängerverkleidung (10) Rückleuchten integriert sind.

7. Wohnwagen nach einem der vorhergehenden Ansprüche, dadurch gekennzeichnet, daß in einem Abströmungsbereich der Aufbaustruktur zur Bildung einer Strömungsabrißkante wenigstens ein Luftleitelement (9), insbesondere ein Spoiler, vorgesehen ist.

8. Wohnwagen nach einem der vorhergehenden Ansprüche, dadurch gekennzeichnet, daß eine Deichsel mit einer aerodynamisch geformten Verkleidung (12) versehen ist.

9. Wohnwagen nach dem Oberbegriff des Anspruchs 1 oder nach einem der vorhergehenden Ansprüche, dadurch gekennzeichnet, daß eine ein- oder mehrteilige Platteneinheit (2, 4, 5) sich unter Bildung des Dachbereiches (4) über die gesamte Aufbaulänge erstreckt und sowohl in einem Heckbereich (5) als auch in dem Bugbereich (2) unter einseitiger Krümmung bis zu einem Bodenbereich der Aufbaustruktur nach unten gezogen ist.

10. Wohnwagen nach Anspruch 9, dadurch gekennzeichnet, daß ebene Seitenwandplattenteile (3) mit der ein- oder mehrteiligen Platteneinheit (2, 4, 5) mit Hilfe von an den benachbarten Randbereichen verlaufenden Kantenprofilen (6) verbunden sind.

11. Wohnwagen nach Anspruch 3, dadurch gekennzeichnet, daß wenigstens eines der Konturteile (7) lösbar mit der Aufbaustruktur verbunden ist, und daß an das Konturteil (7) anschließend im Inneren der Aufbaustruktur ein Stauraum (17) vorgesehen ist.

12. Wohnwagen nach Anspruch 11, dadurch gekennzeichnet, daß der Stauraum (17) sich über die gesamte Breite der Aufbaustruktur in Wagenquerichtung erstreckt.

13. Wohnwagen nach einem der Ansprüche 11 oder 12, dadurch gekennzeichnet, daß der Stauraum (17) zu beiden Konturteilen (7) des Bugbereiches (2) hin offen ist, und daß beide Konturteile (7) lösbar angeordnet sind.

14. Wohnwagen nach einem der vorhergehenden Ansprüche, dadurch gekennzeichnet, daß das wenigstens eine Konturteil (7) schwenkbeweglich an der Aufbaustruktur gelagert ist und in seiner geschlossenen Ruheposition mittels einer Schloßeinheit arretiert ist.

15. Wohnwagen nach Anspruch 14, dadurch gekennzeichnet, daß an dem wenigstens einen Konturteil (7) eine Handhabe (14) zum manuellen Öffnen sowie ein Betätigungselement zum manuellen Entriegeln der Schloßeinheit vorgesehen ist.

16. Wohnwagen nach einem der Ansprüche 11 bis 13, dadurch gekennzeichnet, daß der Stauraum (17) durch wenigstens eine Trennwand (19) vom Wageninnenraum abgetrennt ist.

17. Wohnwagen nach Anspruch 16, dadurch gekennzeichnet, daß die Trennwand (19) lösbar zwischen Stauraum (17) und Wageninnenraum angeordnet ist.

18. Wohnwagen nach einem der vorhergehenden Ansprüche, dadurch gekennzeichnet, daß im Stauraum (17) Sicherungsmittel zur Halterung von Transportgegenständen (15, 16) vorgesehen sind.
